# EUROPEAN PATENT APPLICATION

(11) **EP 4 506 773 A1**
(43) Date of publication of application: **12.02.2025**
(21) Application number: 24193604.6
(22) Date of filing: 08.08.2024
(51) Int. Cl.: G05D 11/13

(54) **SYSTEMS AND METHODS FOR FLUID BLENDING IN A FLUID DISTRIBUTION SYSTEM**

(30) Priority: 09.08.2023 US 202363531723 P
(71) Applicant: Sensia Netherlands B.V., 3065 WB Rotterdam (NL)
(72) Inventor: Wright, Stuart Fraser, Battle, TN33 0HU (GB)
(74) Representative: Gill Jennings & Every LLP

(57) **Abstract**

A method for operating a blending system includes obtaining sensor data of a fluid of an outlet stream of the blending system from sensors of a sensing unit. The method also includes obtaining at least one of a fraction parameter, a fracture parameter, or an equipment parameter a hydrogen composition of the fluid. The method also includes performing a real-time and closed-loop control scheme using the sensor data and at least one of the fraction parameter, the fracture parameter, or the equipment parameter to determine one or more control decisions. The method also includes operating one or more controllable pipeline elements to adjust the hydrogen composition of the fluid according to the one or more control decisions.

## Description

### CROSS REFERENCE TO RELATED PATENT APPLICATIONS

This application claims the benefit of and the priority to U.S. Provisional Patent Application No. 63/531,723, filed August 9, 2023, the entire disclosure of which is incorporated by reference herein.

### BACKGROUND

The present disclosure relates to control systems or schema for a fluid blending system. More particularly, the present disclosure relates to closed-loop control systems or schema for a fluid blending system including but not limited to a natural gas and hydrogen blending system, a natural gas and additive blending system, a natural gas, hydrogen, and additive blending system and blending systems for other mixtures of hydrogen and fluids (e.g., oil and gas products). An operator of a fluid transportation network may desire to transport hydrogen through the fluid transportation network. The fluid transportation network may have a hydrogen composition limit for a blended fluid traveling through the fluid transportation network. However, the operator may not have access to data to be able to determine a hydrogen composition in the blended fluid with sufficient accuracy. Instead, the operator may rely on conservative estimates of the hydrogen composition, which may result in an actual hydrogen composition in the blended fluid that is significantly lower than the hydrogen composition limit of the fluid transportation network. Therefore, it would be advantageous to provide a system or a method that uses online sensor data to adjust the hydrogen composition in the blended fluid.

### SUMMARY

One implementation of the present disclosure is a method for operating a blending system, according to some embodiments. In some embodiments, the method includes obtaining sensor data of a fluid of an outlet stream of the blending system from sensors of a sensing unit. In some embodiments, the method also includes obtaining at least one of a fraction parameter, a fracture parameter, or an equipment parameter for a hydrogen composition in the fluid. In some embodiments, the method also includes performing a control scheme using the sensor data and at least one of the fraction parameter, the fracture parameter, or the equipment parameter to determine one or more control decisions. In some embodiments, the method includes operating one or more controllable pipeline elements of the blending system to adjust the hydrogen composition of the fluid according to one or more control decisions.

Another implementation of the present disclosure is a controller for a blending system, according to some embodiments. In some embodiments, the controller includes processing circuitry configured to obtain sensor data of a fluid of an outlet stream of the blending system from sensors of a sensing unit. In some embodiments, the processing circuitry is also configured to obtain at least one of a fraction parameter, a fracture parameter, or an equipment parameter for a hydrogen composition in the fluid. In some embodiments, the processing circuitry is also configured to perform a control scheme using the sensor data and at least one of the fraction parameter, the fracture parameter, or the equipment parameter to determine one or more control decisions. In some embodiments, the processing circuitry is also configured to operate one or more controllable pipeline elements to adjust the hydrogen composition of the fluid according to one or more control decisions.

Some embodiments relate to a method of operating a blending system. The method includes obtaining sensor data of a fluid of an outlet stream of the blending system from sensors of a sensing unit, obtaining at least one of a fraction parameter, a fracture parameter, or an equipment parameter for a hydrogen composition in the fluid, and performing a real-time and closed-loop control scheme using the sensor data and at least one of the fraction parameter, the fracture parameter, or the equipment parameter, to determine one or more control decisions. The method can also include operating one or more controllable pipeline elements to adjust the hydrogen composition of the fluid according to the one or more control decisions.

In some embodiments, the control scheme uses the sensor data and the fraction parameter, the fracture parameter, and the equipment parameter to determine the one or more control decisions. In some embodiments, the control scheme uses the sensor data and two or more of the fraction parameter, the fracture parameter, and the equipment parameter to determine the one or more control decisions.

In some embodiments, the method also includes providing display data related to the sensor data and an operational sate of one or more controllable pipeline elements for display of information related to the sensor data and the operational sate of one or more controllable pipeline elements.

In some embodiments, the control decisions include increasing or decreasing pressure, increasing or decreasing temperature by heating or cooling, changing composition by injecting additives, or changing the composition by injecting hydrogen. In some embodiments, wherein the control decisions include increasing or decreasing the pressure, increasing or decreasing the temperature by heating or cooling, changing the composition by injecting additives, and changing the composition by injecting hydrogen.

In some embodiments, control objectives for the control scheme include maximizing the hydrogen composition of the fluid, reducing likelihood of a pipeline fracturing, maintaining a gas in a desired phase, transitioning the gas into the desired phase, or operating with the gas below a desired hydrogen composition. In some embodiments, the control objectives include maximizing the hydrogen composition of the fluid, reducing likelihood of the pipeline fracturing, maintaining the gas in the desired phase, transitioning the gas into the desired phase, and operating with the gas below the desired hydrogen composition.

Some embodiments relate to a controller for a blending system. The controller includes a processing circuitry configured to obtain sensor data of a fluid of an outlet stream of the blending system from sensors of a sensing unit, obtain at least one of a fraction parameter, a fracture parameter, or an equipment parameter, for a hydrogen composition in the fluid, perform a real-time and closed-loop control scheme using the sensor data and at least one of the fraction parameter, the fracture parameter, or the equipment parameter, to determine one or more control decision, and operate one or more controllable pipeline elements to adjust the hydrogen composition of the fluid according to the one or more control decisions.

In some embodiments, the control scheme uses the sensor data and the fraction parameter, the fracture parameter, and the equipment parameter, to determine the one or more control decisions. In some embodiments, the control scheme uses the sensor data and the fraction parameter, the fracture parameter, and the equipment parameter, to determine the one or more control decisions. In some embodiments, the controller is also configured to provide display data related to the sensor data and an operational sate of one or more controllable pipeline elements for display of information related to the sensor data and the operational sate of one or more controllable pipeline elements.

In some embodiments, control decisions include increasing or decreasing pressure, increasing or decreasing temperature by heating or cooling, changing composition by injecting additives, or changing the composition by injecting hydrogen. In some embodiments, the control decisions include increasing or decreasing the pressure, increasing or decreasing the temperature by heating or cooling, changing the composition by injecting additives, and changing the composition by injecting hydrogen.

In some embodiments, control objectives for the control scheme include maximizing the hydrogen composition of the fluid, reducing likelihood of a pipeline fracturing, maintaining a gas in a desired phase, transitioning the gas into the desired phase, or operating with the gas below a desired hydrogen composition. In some embodiments, the control objectives comprise maximizing the hydrogen composition of the fluid, reducing likelihood of the pipeline fracturing, maintaining the gas in the desired phase, transitioning the gas into the desired phase, and operating with the gas below the desired hydrogen composition. In some embodiments, the controller also includes a fractional limits database, a fracture limits database, an additives limit database, and an equipment limits database.

Some embodiments relate to a pipeline system. The pipeline system includes a pipeline, one or more controllable pipeline elements to adjust a hydrogen composition of a fluid in the pipeline, and a controller. The controller is configured to obtain sensor data of the fluid from sensors of a sensing unit, obtain at least one of a fraction parameter, a fracture parameter, or an equipment parameter, for the hydrogen composition in the fluid, perform a real-time and closed-loop control scheme using the sensor data and at least one of the fraction parameter, the fracture parameter, or the equipment parameter, to determine one or more control decisions, and operate the one or more controllable pipeline elements to adjust the hydrogen composition of the fluid according to the one or more control decisions.

In some embodiments, the one or more controllable pipeline elements comprise a first valve and a second valve configured to control additives provided to the pipeline in response to the control decisions. In some embodiments, the sensor data includes a flow rate of the fluid.

### BRIEF DESCRIPTION OF THE DRAWINGS

The disclosure will become more fully understood from the following detailed description, taken in conjunction with the accompanying figures, wherein like reference numerals refer to like elements, in which:
FIG. 1 is a schematic diagram of a system for a pipe system including a meter and a control system, according to some embodiments.
FIG. 2 is a schematic diagram of a blending system of the pipe system of FIG. 1 including a first valve and a second valve, according to some embodiments.
FIG. 3 is a schematic diagram of a blending system of the pipe system of FIG. 1 including a first valve, according to some embodiments.
FIG. 4 is a block diagram of the control system of FIGS. 1, 2, or 3, according to some embodiments.
FIG. 5 is a system infrastructure on which the control system of FIGS. 1, 2, 3, and 4 can be implemented, according to some embodiments.
FIG. 6 is a flow diagram of a process for operating a blending system using sensor data and at least one of a fraction parameter, a fracture parameter, an equipment parameter, or an additive parameter of a fluid of the blending system, according to some embodiments.

### DETAILED DESCRIPTION

Before turning to the FIGURES, which illustrate the exemplary embodiments in detail, it should be understood that the present application is not limited to the details or methodology set forth in the description or illustrated in the FIGURES. It should also be understood that the terminology is for the purpose of description only and should not be regarded as limiting.

### Overview

The demand for hydrogen as a high energy physical fuel (e.g., to power vehicle to power homes, as a portable fuel source, et.) has significantly increased in recent years. However, much of the existing fluid transportation networks (e.g., pipelines, fluid terminals, fluid separators, etc.) were not designed to accommodate high compositions of hydrogen and may have a hydrogen composition limit (e.g., a maximum hydrogen composition, etc.). For example, a pipeline may be at risk of fracturing (e.g., cracking, leaking, etc.) due to hydrogen embrittlement when transporting a fluid with a high hydrogen composition (e.g., above twenty percent hydrogen, above thirty percent hydrogen, etc.).

In order to transport hydrogen through the fluid transportation network, some operators (e.g., energy companies, hydrocarbon transportation companies, midstream operators, etc.) may blend hydrogen with natural gas (e.g., a gas of predominantly methane, a mixture of gaseous hydrocarbons, etc.) to form a blended fluid (e.g., a fraction of natural gas, a mixture of natural gas and hydrogen, etc.) with a hydrogen concentration below the hydrogen composition limit of the fluid transportation network. The operators may then separate (e.g., using separators, using membranes to filter the blended fluid, etc.) the hydrogen from the natural gas when the blended fluid has reached a destination (e.g., a storage facility, a power plant, an industrial site, etc.). However, the natural gas may contain a portion of hydrogen (e.g., a ration of hydrogen, a hydrogen composition etc.) prior to blending with the hydrogen. In some cases, the operator may not be aware of the hydrogen composition of the natural gas. For example, the operator may not have access to online sensor data indicating the hydrogen composition of the natural gas or the hydrogen composition of the blended fluid. As a result, the operator may conservatively reduce the amount of the hydrogen that is blended with the natural gas to avoid exceeding the hydrogen composition limit of the fluid transportation network, resulting in a reduced quantity of hydrogen transported through the fluid transportation network and arriving at the destination.

Additionally, some operators may blend additional additives (e.g., anti-cracking agents, odorizers, etc.) with the hydrogen and natural gas. For example, the operator may blend anti-cracking agents with the natural gas and the hydrogen to increase the hydrogen composition limit of the fluid transportation network. However, without online sensor data of hydrogen composition, the operator may conservatively increase the quantity of additives blended with the hydrogen and the natural gas in cases where the hydrogen composition is already below the hydrogen composition limit of the fluid transportation network. As a result, the operator may blend excess quantities of the additives than required with the hydrogen and the natural gas, resulting in increased costs and resource usage.

Implementations described herein are related to a hydrogen blending system that does not use conservative estimation to determine the amount of hydrogen that can be blended with the natural gas. Instead, the hydrogen blending system described herein uses online sensor data to adjust the hydrogen composition in the blended fluid. As a result, an operator can maximize the quantity of hydrogen transported through the fluid transportation network without exceeding the hydrogen composition limits of the fluid transportation network. Additionally, the blending system described herein is capable of using online sensor data to adjust the additive composition of the blended fluid. As a result, the operator is able to minimize the quantity of additives blended with the hydrogen and natural gas.

Referring generally to the FIGURES, systems and methods for fluid blending techniques (e.g., hydrogen fluid blending techniques, etc.) for a pipeline are shown, according to some embodiments. The pipeline includes a blending system that includes a first inlet, a second inlet, and an outlet. The blending system is configured to blend a first inlet stream from the first inlet and a second inlet stream from the second inlet stream to form an outlet stream. In some embodiments, the blending system is a passive blending system (e.g., blends without moving components, etc.). In other embodiments, the blending system is an active blending system (e.g., blends using mixers, blends using a paddle, etc.).

A control system for the blending system includes sensing units configured to measure temperature, pressure, flow rate and composition of a fluid flowing through the blending system as sensor data, according to some embodiments. The control system also includes a controller that is configured to obtain the sensor data from the sensing unit and use at least one of a fraction parameter, a fracture parameter, an equipment parameter, or an additive parameter in a closed-loop control scheme to determine one or more control decisions, according to some embodiments. The sensor data can be obtained and used by the controller, in combination with the least one of the fraction parameter, the fracture parameter, the equipment parameter, or the additive parameter, to determine control decisions in real-time, according to some embodiments. The control decisions are implemented (e.g., increasing or decreasing pressure, increasing or decreasing the temperature by heating or cooling, changing the composition by injecting additives, changing the composition by injecting hydrogen, etc.) to achieve one or more control objectives, according to some embodiments. The control objectives can include maximizing the hydrogen composition of the fluid, reducing the likelihood of the pipeline fracturing, maintaining the gas in a desired phase, transitioning the gas into the desired phase, operating with the gas below a desired hydrogen composition, etc., according to some embodiments.

### Blending Techniques

### Gas Pipeline

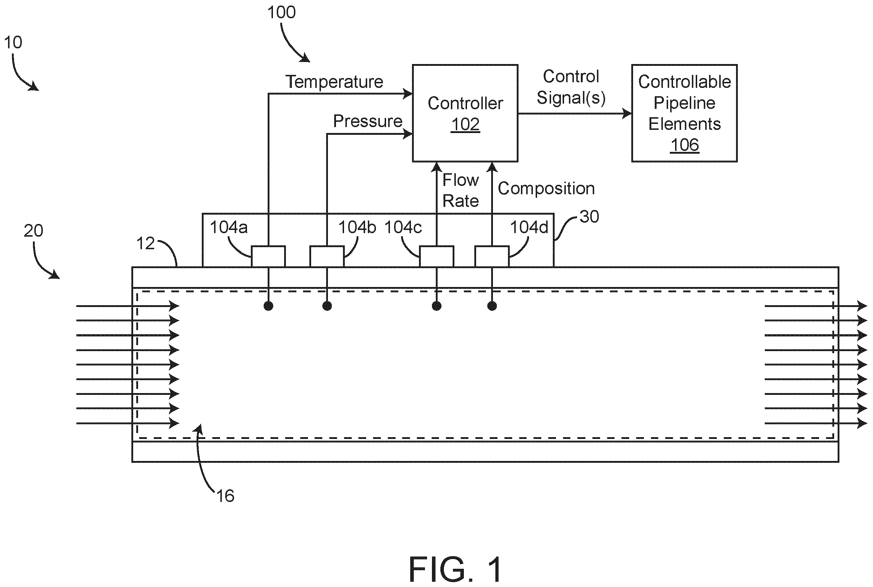

Referring to FIG. 1, a system 10 for monitoring a pipeline 12 (e.g., a pipeline for fluid such as gas or liquid or a mixture of the two, a pipeline for a gas such as a compressible gas, natural gas including methane and contaminants, an acid gas such as carbon dioxide and hydrogen sulfide, or a pipeline for liquids such as natural gas, gasoline, aviation fuel, crude oil, distillates, diesel, butane, propane, ethane, etc.) is shown, according to some embodiments. The system 10 can be configured to monitor one or more conditions of a fluid 16 (e.g., a hydrocarbon, a natural gas, a gas, a liquid/gas mixture, etc.) that flows or travels within the pipeline 12. The system 10 can include a control system 100 that is configured to receive and use sensor inputs from one or more sensing units 30 that measure one or more conditions or properties of the fluid (e.g., temperature, pressure, dynamic pressure, static pressure, flow rate, etc.) to adjust the operation of one or more devices of the system 10 (e.g., to affect the fluid 16 within the pipeline 12). In some embodiments, the pipeline 12 is for a crude oil, natural gas, hydrogen, gasoline, an acid gas (e.g., including a mixture of carbon dioxide and hydrogen sulfide) or other petroleum products including but not limited to mixtures of oil and gas products.

The pipeline 12 may be a portion of a pipeline system 20. The pipeline system 20 can be a distribution, manufacturing, or consumption system for distributing the fluid 16, manufacturing the fluid 16, or consuming the fluid 16. In some embodiments, the fluid 16 may change composition throughout different portions of the pipeline system 20 (e.g., a liquid, a liquid/gas mixture, a hydrocarbon, an additive, etc.). In some embodiments, the pipeline system 20 is configured to gather the fluid 16 (e.g., receive gas and/or oil from wells), transmit the fluid 16 (e.g., ship gas and/or oil across the country), and/or distribute the fluid 16 (e.g., distribute gas and/or oil to end customers). In various embodiments, the pipeline system 20 is configured to gather multiple streams of the fluid 16 into a single stream. It should be understood that while FIG. 1 shows only a portion of the pipeline system 20, the pipeline system 20 may be more extensive, and may include any number of pipes, conduits, tubular members, etc. In some embodiments, the control system 100 as shown in FIG. 1 is repeated at various intervals down the pipeline system 20.

The control system 100 also includes the sensing unit 30 that includes one or more sensors 104. In some embodiments, the control system 100 may include any number of sensing units 30 to measure conditions or properties of the fluid 16 at different locations of the pipeline 12 or the pipeline system 20. A first sensor 104a may be configured to measure the temperature of the fluid 16 that flows through the pipeline 12. A second sensor 104b may be configured to measure the pressure (e.g., dynamic, static, etc.) of the fluid 16 that flows through the pipeline 12. A third sensor 104c can be configured to measure the velocity or flow rate (e.g., volumetric flow rate, mass flow rate, etc., or any combination thereof) of the fluid 16 that flows through the pipeline 12. A fourth sensor 104d can be configured to measure the composition of the fluid 16 that flows through the pipeline 12. For example, the fourth sensor 104d can be a collection of one or more sensors, configured to measure or detect the presence, or concentration of any of methane, nitrogen, carbon dioxide, ethane, propane, water, hydrogen sulfide, hydrogen, carbon monoxide, oxygen, iso-butane, normal butane, iso-pentane, normal pentane, hexane, heptane, octane, nonane, decane, helium, argon, benzene, ethyl benzene, toluene, methanol, glycol, etc. In some embodiments, the fourth sensor 104d may include a sensor that takes a sample of the fluid 16 to determine the composition of the fluid 16 and may have a sample cycle time frame (e.g., three minutes, seven minutes, etc.) such that the fourth sensor 104d measures the composition of the fluid 16 once for every sample cycle time frame. In other embodiments, the fourth sensor 104d may include an ultrasonic sensor that measures the composition of the fluid 16 in real-time. It should be understood that the sensing unit 30 can include any number of sensors configured to measure other conditions or properties of the fluid 16, or to measure/obtain values of properties or conditions of the fluid 16 that can be used (e.g., by a controller) to estimate or calculate other properties of the fluid 16 (e.g., using a model of a composition of the fluid 16).

In some embodiments, the fourth sensor 104d is or includes a gas chromatograph configured to obtain a sample of the fluid 16, separate chemical components of the fluid 16, and detect or sense a presence and/or concentration of each of the different chemical components of the fluid 16. The fourth sensor 104d can be configured to provide the detected presence and/or concentration of each of the different chemical components of the fluid 16 to a controller 102 of the control system 100 for use in closed-loop or feedback control, according to some embodiments. In some embodiments, the fourth sensor 104d is or includes a laser interferometer configured to monitor certain chemical components of the fluid 16. In some embodiments, the fourth sensor 104d is or includes a hydrogen (H₂) sensor, a water sensor and/or a hydrogen sulfide (H₂S) sensor, configured to detect a presence and/or concentration of H₂, water/moisture and/or H₂S.

It should be understood that the pipeline 12 as described herein may transfer a gas, a liquid, a fluid, etc. In some embodiments, the fluid 16 is a diesel fuel, gasoline, propane, etc. In some embodiments, the fluid 16 is configured to transport different types of gases or substances. For example, the pipeline 12 can be configured to transport both a diesel fuel and gasoline, according to some embodiments. When different gases or liquids or substances are transported through the pipeline 12, the different gases, liquids, or substances may mix at an interface between the different substances (resulting in a slop or transmix mixture).

The control system 100 includes the controller 102 (e.g., a programmable logic controller (PLC), a feedback controller, a processing unit, processing circuitry, etc.) that is configured to obtain sensor data from the sensing unit 30, or from various of the sensors 104 of the sensing unit 30. The controller 102 can use the sensor data obtained from the sensing unit 30 to determine one or more properties (e.g., a phase) of the fluid 16 that flows within the pipeline 12 and can generate control decisions for one or more controllable pipeline elements 106. The controllable pipeline elements 106 may be configured to adjust an operation of the pipeline system 20 (e.g., a shut-off valve or pressure control valve) or to adjust/control one or more properties of the fluid 16 that flows through the pipeline 12 (e.g., adjusting operation of a pump or compressor). In this way, the controller 102 can perform a closed-loop feedback control scheme to adjust operation of the controllable pipeline elements 106 based on real-time or current sensor data obtained from one or more of the sensing units 30. In some embodiments, temperature, pressure, flow rate and composition can be controlled by various equipment (e.g., a valve for changing flow composition, heating coil, cooling coil, boiler, heat exchanger, port for inserting or removing material, a compressor or pump for controlling pressure, a mixer for changing homogeneity of the material, etc.). The controller 102 can also use a model of a composition of the fluid 16 that flows through the pipeline 12 to estimate a phase of the fluid 16. The controller 102 can generate the control signal(s) for the controllable pipeline elements 106 to maintain the fluid 16 at a desired composition, a desired phase, or at a desired temperature and pressure. The controller 102 may operate the controllable pipeline elements 106 to maintain the fluid 16 at the desired composition to maximize a hydrogen composition in the fluid 16 (e.g., in order to transport a maximum quantity of hydrogen through the pipeline 12, etc.), reduce the likelihood of the pipeline 12 fracturing (e.g., due to hydrogen embrittlement, etc.), or to reduce an amount of hydrogen within the fluid 16 due to production requirements (e.g., compressors unable to handle the fluid 16 with a hydrogen composition above a certain level, a burner unable to fully combust the fluid 16 with a hydrogen composition above a certain level, etc.).

### Blending System

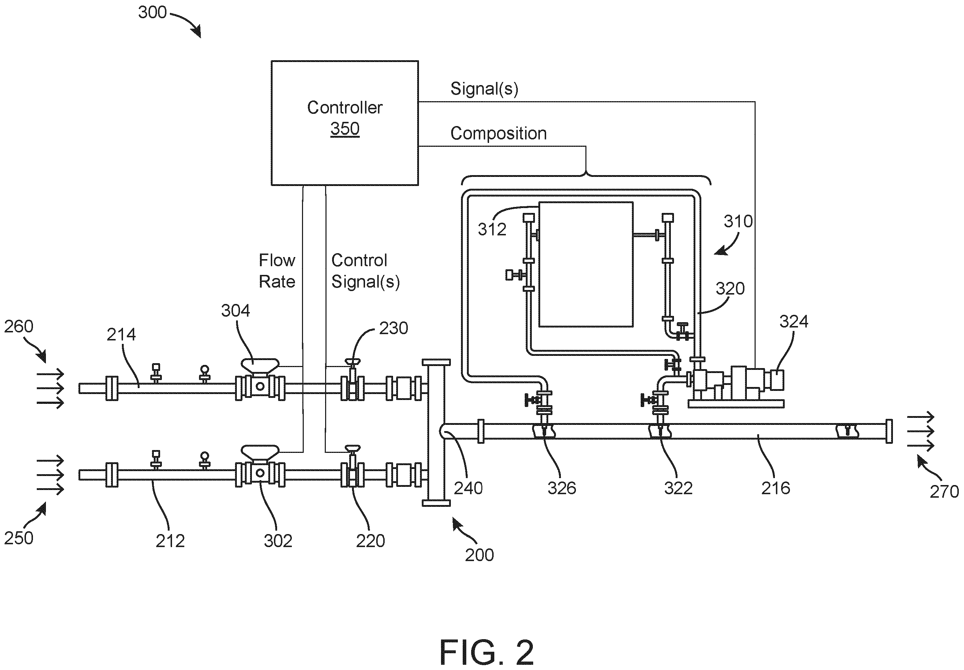

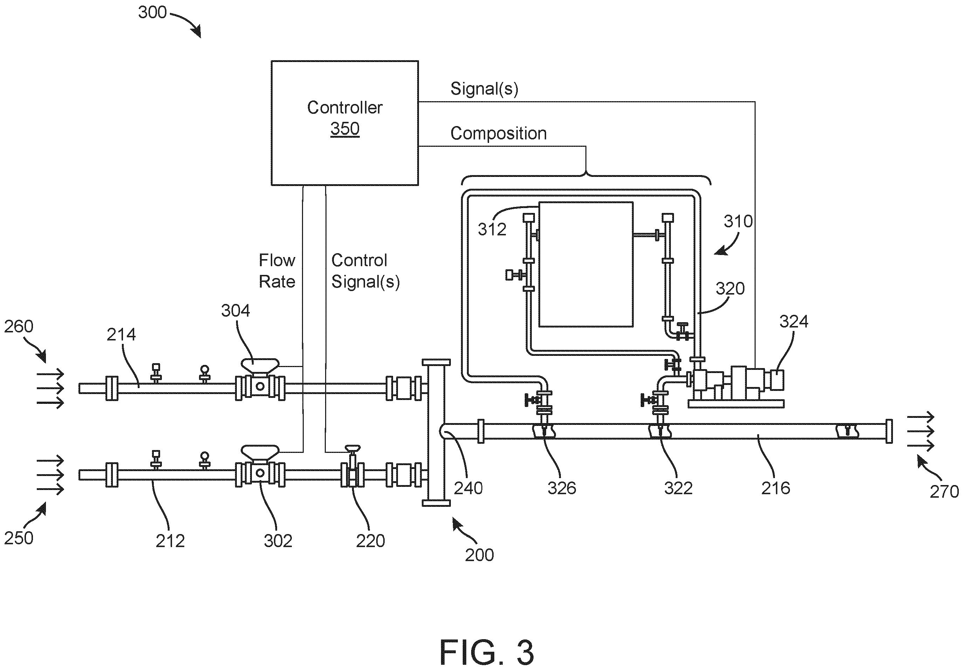

Referring to FIGS. 2 and 3, the pipeline system 20 may include a blending system 200, according to some embodiments. The blending system 200 can be configured to blend together multiple streams of the fluid 16. In some embodiment the blending system 200 receives the fluid 16 through a first inlet 212 of the pipeline 12, receives the fluid 16 through a second inlet 214 of the pipeline 12, and outputs the fluid 16 through an outlet 216 of the pipeline 12. In various embodiments, the blending system 200 may be configured to receive additional streams of the fluid 16 through additional inlets (e.g., a third inlet, a fourth inlet, etc.). In some embodiments, the blending system 200 may be configured to output the fluid 16 through a second outlet. In some embodiments, the blending system 200 includes a first of the controllable pipeline elements 106 configured as first valve 220 and a second of the controllable pipeline elements 106 configured as second valve 230. The first valve 220 may be fluidly coupled to the first inlet 212 and configured to change a first flow rate through the first inlet 212. The second valve 230 may be fluidly coupled to the second inlet 214 and configured to change a second flow rate through the second inlet 214. In the exemplary embodiment shown in FIG. 3, the blending system 200 does not include the second valve 230 such that the second flow rate may not be changed (e.g., a wild stream that cannot be controlled, a stream from a well that has a constant flow rate determined by a reservoir, a pump contributing to the second flow rate must be run above a certain flow rate, etc.). In still other embodiments, the blending station includes various other of the controllable pipeline elements 106 configured to change the first flow rate through the first inlet 212 and the second flow rate through the second inlet 214 (e.g., pumps compressors, etc.). In various embodiments, the blending station may include additional of the controllable pipeline elements 106 for each of the additional inlets (e.g., a third valve fluidly coupled to the third inlet and configured to change a third flow rate through the third inlet, a fourth valve fluidly coupled to the fourth inlet and configured to change a fourth flow rate through the fourth inlet, etc.).

In some embodiments, the blending system 200 includes a blend header 240 configured to blend (e.g., mix, combine, etc.) a first inlet stream 250 of the fluid 16 from the first inlet 212 and a second inlet stream 260 from the second inlet 214 to form an outlet stream 270 outputted through the outlet 216. In some embodiments, the blend header 240 is configured to passively blend (e.g., blend without moving components, blend through causing turbulence in the fluid 16, etc.) the first inlet stream 250 and the second inlet stream 260. In other embodiments, the blend header 240 includes a blender (e.g., a rotating mixer, a moving paddle, etc.) configured to actively blend the first inlet stream 250 and the second inlet stream 260. In various embodiments, the first inlet stream 250 may contain hydrogen (e.g., a stream of high purity hydrogen, H₂, etc.), an additive, and/or multiple additives (e.g., an anti-cracking agent, an odorizer, etc.) and the second inlet stream 260 contains natural gas. In various embodiments, the blending system 200 may be configured to blend additional streams of the fluid 16 with the first inlet stream 250 and the second inlet stream 260 (e.g., a third inlet stream from the third inlet, a fourth inlet stream from the fourth inlet, etc.). In some embodiments, the first inlet stream 250 contains hydrogen, the second inlet stream 260 contains natural gas, and the third inlet stream contains the additive or multiple additives.

Still referring to FIGS. 2 and 3, the control system 100 may be configured as a blend control system 300 to receive and use sensor inputs related to the operation of the blending system 200, according to some embodiments. In some embodiments, the blend control system 300 includes a first of the sensing unit 30 configured as first inlet unit 302 and a second of the sensing unit 30 configured as second inlet unit 304. According to some embodiments, the first inlet unit 302 is configured to measure the velocity or flow rate of the first inlet stream 250 using the third sensor 104c. In various embodiments, the first inlet unit may include additional sensors (e.g., the first sensor 104a, the second sensor 104b, the fourth sensor 104d, etc.) to measure other properties of the first inlet stream 250. According to some embodiments, the second inlet unit 304 is configured to measure the velocity or flow rate of the second inlet stream 260 using the third sensor 104c. In various embodiments, the second inlet unit 304 may include additional sensors (e.g., the first sensor 104a, the second sensor 104b, the fourth sensor 104d, etc.) to measure other properties of the second inlet stream 260. In various embodiments, the blend control system 300 may include additional of the sensing units 30 for each of the additional inlets (e.g., a third inlet unit coupled to the third inlet and configured to measure the velocity or flow rate of the third inlet stream, a fourth inlet unit coupled to the fourth inlet and configured to measure the velocity or flow rate of the fourth inlet stream, etc.).

In some embodiments, the blend control system 300 also includes an outlet sensing system 310 configured to gather information of the outlet stream 270. In some embodiments, the outlet sensing system 310 includes a third of the sensing unit 30 configured as outlet unit 312. In some embodiments, outlet unit 312 is configured to detect or sense a presence and/or concentration of one of or each of the different chemical components of the outlet stream 270 using the fourth sensor 104d. In various embodiments, the outlet unit 312 may include additional sensors (e.g., the first sensor 104a, the second sensor 104b, the fourth sensor 104d, etc.) to measure other properties of the outlet stream 270. In some embodiments, the outlet unit 312 is configured to receive an off stream (e.g., a side stream, a smaller stream taken off of the outlet stream 270, etc.) of the outlet stream 270 into a composition loop 320. In some embodiments, the composition loop 320 includes a loop inlet 322 fluidly coupled to the outlet 216, a pump 324 (i) fluidly coupled to the loop inlet 322, (ii) fluidly coupled to the outlet sensing system 310, and (iii) configured to drive (e.g., force, push, etc.) the off stream of the outlet stream 270 along the composition loop 320, and a loop outlet 326 fluidly coupled to the outlet sensing system 310 and fluidly coupled to the outlet 216. In other embodiments, the composition loop does not include the pump 324 and the off stream of the outlet stream 270 is driven along the composition loop 320 by different means (e.g., a pressure differential between the loop inlet 322 and the loop outlet 326, gravitational force, etc.). In still other embodiments, the outlet unit 312 is configured to detect or sense a presence and/or concentration of one of or each of the different chemical components of the outlet stream 270 within the outlet 216 such that the outlet sensing system 310 does not include the composition loop 320 (e.g., the outlet unit 312 includes an ultrasonic sensor coupled to the outlet 216 that senses the composition of the outlet stream 270, etc.).

The blend control system 300 also includes the controller 102 configured as blend controller 350, according to some embodiments. In some embodiments, the blend controller 350 is configured to obtain sensor data from the first inlet unit 302, the second inlet unit 304, and the outlet unit 312. In some embodiments, the blend controller 350 may be configured to adjust an operation of the first valve 220 (e.g., open the first valve 220, close the first valve 220, etc.) and the second valve 230 (e.g., open the second valve 230, close the second valve 230, etc.). In other embodiments, the blend controller 350 may only be configured to adjust the operation of the first valve 220 (e.g., when the blend control system 300 does not include the second valve 230, etc.). In various embodiments, the blend controller 350 may be configured to obtain data from the additional sensing units (e.g., the third inlet unit, the fourth inlet unit, etc.) and to adjust the operation of the additional valves (e.g., open the third valve, close the third valve, open the fourth valve, close the fourth valve, etc.) In this way, the controller 102 can perform a closed-loop feedback control scheme to adjust the operation of the outlet sensing system 310 based on real-time or current sensor data obtained from the first inlet unit 302, the second inlet unit 304, and the outlet sensing system 310.

### Controller Diagram

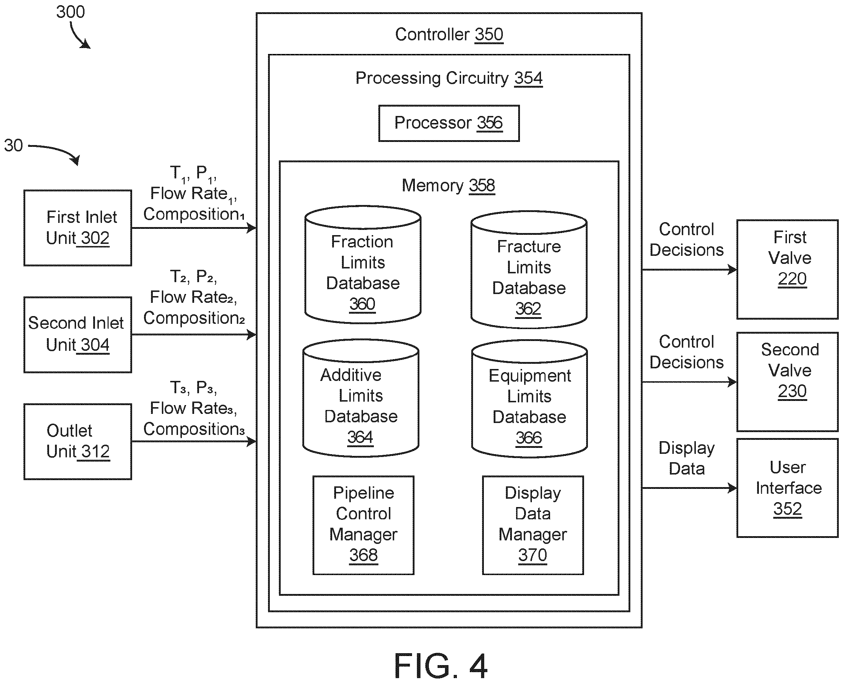

Referring now to FIG. 4, the blend control system 300 is shown in greater detail, according to some embodiments. The blend control system 300 includes the blend controller 350, the first inlet unit 302, the second inlet unit 304, the outlet unit 312, the first valve 220, the second valve 230, and a user interface 352 (e.g., a device including a display screen, a user input device, etc.). In some embodiments, the blend controller 350 is configured to obtain sensor inputs from the first inlet unit 302, including the temperature of the first inlet stream 250, the pressure of the first inlet stream 250, the flow rate (e.g., velocity, volumetric flow rate, etc.) of the first inlet stream 250, and/or the composition of the first inlet stream 250 (e.g., the hydrogen composition of the first inlet stream 250, etc.). In some embodiments, the blend controller 350 is configured to obtain sensor inputs from the second inlet unit 304, including the temperature of the second inlet stream 260, the pressure of the second inlet stream 260, the flow rate (e.g., velocity, volumetric flow rate, etc.) of the second inlet stream 260, and/or the composition of the second inlet stream 260 (e.g., the hydrogen composition of the second inlet stream 260, etc.). In some embodiments, the blend controller 350 is configured to obtain sensor inputs from the outlet unit 312, including the temperature of the outlet stream 270, the pressure of the outlet stream 270, the flow rate (e.g., velocity, volumetric flow rate, etc.) of the outlet stream 270, and/or the composition of the outlet stream 270 (e.g., the hydrogen composition of the outlet stream 270, etc.). In various embodiments, the blend controller 350 is configured to obtain sensor inputs from multiple of the sensing units 30.

In some embodiments, the blend controller 350 can use the sensor inputs in a model to determine control operations or control signals for the first valve 220 and the second valve 230 to maintain the outlet stream 270 within or at a desired composition, to maximize the hydrogen composition of the outlet stream, to reduce a likelihood of fracture of the pipeline 12, etc. In other embodiments, the blend controller 350 can use the sensor inputs in a model to determine control operations or control signals for the first valve 220 to maintain the outlet stream 270 within or at a desired composition (e.g., when the second inlet stream 260 is a wild stream, etc.). In various embodiments, the blend controller 350 can use the sensor inputs in a model to determine control operations or control signals for multiple of the controllable pipeline elements 106. The blend controller 350 can also generate and output display information for the user interface 352 (e.g., an X-Y plot, a table, etc.) so that the user interface 352 can operate to display current conditions of the first inlet stream 250, the second inlet stream 260, and/or outlet stream 270 for an operator or a technician.

The blend controller 350 includes processing circuitry 354 including a processor 356 and a memory 358. The processor 356 can be a general purpose or specific purpose processor, an application specific integrated circuit (ASIC), one or more field programmable gate arrays (FPGAs), a group of processing components, or other suitable processing components. The processor 356 may be configured to execute computer code and/or instructions stored in the memory 358 or received from other computer readable media (e.g., CDROM, network storage, a remote server, etc.).

The memory 358 can include one or more devices (e.g., memory units, memory devices, storage devices, etc.) for storing data and/or computer code for completing and/or facilitating the various processes described in the present disclosure. The memory 358 can include random access memory (RAM), read-only memory (ROM), hard drive storage, temporary storage, non-volatile memory, flash memory, optical memory, or any other suitable memory for storing software objects and/or computer instructions. The memory 358 can include database components, object code components, script components, or any other type of information structure for supporting the various activities and information structures described in the present disclosure. The memory 358 can be communicably connected to the processor 356 via the processing circuitry 354 and can include computer code for executing (e.g., by the processor 356) one or more processes described herein.

The memory 358 is shown to include a fraction limits database 360, a fracture limits database 362, an additive limits database 364, an equipment limits database 366, a pipeline control manager 368, and a display data manager 370. The fraction limits database 360 can store a fraction parameter or multiple of the fraction parameters (e.g., fractions of the fluid 16 are required by downstream processes, a maximum and/or a minimum hydrogen composition of the fluid 16, etc.) that can be used by the pipeline control manager 368 to determine if adjustments should be made (e.g., to a hydrogen composition of the fluid 16, etc.) to modify the hydrogen composition of the fluid 16 in the pipeline 12. The fracture limits database 362 can store a fracture parameter or multiple of the fracture parameters (e.g., conditions of the fluid 16 that would cause the pipeline 12 to fracture, etc.) that can be used by the pipeline control manager 368 to determine if adjustments should be made (e.g., to an operating pressure of the pipeline 12, to a hydrogen composition of the fluid 16, to an additive composition of an anti-cracking agent of the fluid 16, etc.) to reduce a likelihood of a fracture (e.g., crack, break, etc.) of the pipeline 12. The additive limits database 364 can store an additive parameter or multiple of the additive parameters (e.g., parameters relating to an anti-cracking agent, parameters relating to a paraffin inhibitor, etc.) that can be used by the pipeline control manager 368 to determine if adjustments should be made (e.g., to a maximum additive composition of the outlet stream 270 due to the contents of the outlet stream 270, to a minimum additive composition of the outlet stream 270 due to the contents of the outlet stream 270, to a maximum additive rate of an additive to reduce costs, etc.) to increase the performance of the pipeline 12 (e.g., increase the flow rate of the fluid 16 through the pipeline 12, decrease the energy required to move the fluid 16 through the pipeline 12, etc.). The equipment limits database 366 can store an equipment parameter or multiple of the equipment parameters that can be used by the pipeline control manager 368 to determine if adjustments should be made (e.g., to a maximum hydrogen composition of the outlet stream 270 due to a rating of a burner, to a maximum hydrogen composition of the outlet stream 270 due to a rating of a compressor, etc.) to increase the performance of equipment (e.g., pumps, compressors, burners, etc.) related to the operation of the pipeline 12. The pipeline control manager 122 is configured to use any of the fraction parameters as provided by the fraction limits database 360, any of the fracture parameters as provided by the fracture limits database 362, any of the additive parameters as provided by the additive limits database 364, or any of the equipment parameters as provided by the equipment limits database 366 to determine control operations to at least one of maintain the outlet stream 270 at a desired flow rate, maintain the outlet stream 270 at a desired composition, etc., by providing control signals to the first valve 220 and/or the second valve 230. In various embodiments, the pipeline control manager 122 is also configured to determine control operations by providing control signals to multiple of the controllable pipeline elements 106 of the pipeline 12.

The memory 358 is shown to include the fraction limits database 360, according to some embodiments. The composition of the outlet stream 270 may require a hydrogen composition above or below a certain composition based on how the fluid 16 is being used, transported, or separated. For example, the fraction of the fluid 16 may be restricted to a maximum hydrogen composition due to a maximum hydrogen capacity of a separator at an end of the pipeline 12. As another example, the fraction of the fluid 16 may be restricted to a minimum hydrogen composition due to a minimum hydrogen quantity required to maintain a process (e.g., a power generating process, an industrial process, etc.) at the end of the pipeline 12. The fraction limits database 360 can include a series of lookup tables and/or formulas that can be used to estimate an optimal hydrogen composition along the pipeline 12. For example, the optimal hydrogen composition can be determined or selected from the fraction limits database 360 based on the temperature, pressure, flow rate, composition, etc., of the outlet stream 270 within the pipeline 12, the intended use of the fluid 16, etc. In some embodiments, the blend controller 350 seeks to maintain the hydrogen composition below an acceptable predetermined threshold value based on the fraction limits database 360. If the hydrogen composition exceeds the predetermined threshold, the pipeline control manager 368 may determine one or more responsive control actions (e.g., closing the first valve 220 to reduce the flow rate of the first inlet stream 250 comprising hydrogen into the blend header 240, open the second valve 230 to increase the flow rate of the second inlet stream 260 comprising of natural gas into the blend header 240, etc.) to maintain the hydrogen concentration below the predetermined threshold, according to some embodiments. In some embodiments, the blend controller 350 seeks to maintain the hydrogen composition above an acceptable predetermined threshold value based on the fraction limits database 360. If the hydrogen composition is below the predetermined threshold, the pipeline control manager 368 may determine one or more responsive control actions (e.g., opening the first valve 220 to increase the flow rate of the first inlet stream 250 comprising hydrogen into the blend header 240, close the second valve 230 to decrease the flow rate of the second inlet stream 260 comprising of natural gas into the blend header 240, etc.) to maintain the hydrogen concentration above the predetermined threshold, according to some embodiments. In some embodiments, limits for the hydrogen concentration, or any other limits described herein are established by regulatory agencies and/or engineering studies. In some embodiments, the fraction limits database 360 is optional.

The memory 358 is shown to include the fracture limits database 362 for the pipeline 12, according to some embodiments. If an operating pressure of the pipeline 12 is below 1900 psi, fracture of the pipeline 12 may be negligible or unlikely, according to some embodiments. However, if the operating pressure of the pipeline 12 is above 1900 psi, fracture of the pipeline 12 may be more likely to occur, in combination with current conditions of the fluid 16 within the pipeline 12. For example, different compositions, temperature, pressures, or flow rates may result in a higher likelihood of fracture of the pipeline 12. As a further example, a hydrogen composition of the fluid 16 above a certain level may make the fracture of the pipeline 12 more likely to occur due to hydrogen embrittlement. As another example, a composition of an anti-cracking agent above a certain composition of the anti-cracking agent may make the fracture of the pipeline 12 less likely to occur. The fracture limits database 362 can include a series of lookup tables that can be used to estimate a %Arrest Pipe that conditions along the pipeline 12 (e.g., the temperature, pressure, flow rate, composition, etc.) lie within. For example, the %Arrest Pipe can be determined or selected from the fracture limits database 362 based on the temperature, pressure, flow rate, composition, etc., of the fluid 16 within the pipeline 12. In some embodiments, the blend controller 350 seeks to maintain the %Arrest Pipe below 80%, or any other acceptable predetermined threshold value. If the %Arrest Pipe exceeds the predetermined threshold due to a high hydrogen composition in the outlet stream 270, the pipeline control manager 368 may determine one or more responsive control actions (e.g., closing the first valve 220 to reduce the flow rate of the first inlet stream 250 comprising additives into the blend header 240, open the second valve 230 to increase the flow rate of the second inlet stream 260 comprising of natural gas into the blend header 240, closing the first valve 220 and the second valve 230 to decrease the flow rate of the outlet stream 270, etc.) to maintain the %Arrest Pipe below the predetermined threshold, according to some embodiments. In some embodiments, limits for the %Arrest Pipe, or any other limits described herein are established by regulatory agencies and/or engineering studies.

In some embodiments, the fracture limits database 362 is optional. In some embodiments, the fracture limits database 362 is an operational properties database that includes values of different parameters such as maximum operating pressure, maximum chemical injection concentrations, etc., or any other limitations or parameters within which control logic of the pipeline control manager 368 operates.

The memory 358 is shown to include the additive limits database 364, according to some embodiments. The composition of the second inlet stream 260 may require a composition of an additive above or below a certain composition in order for the outlet stream 270 to flow along the pipeline 12. For example, different compositions of additives in the outlet stream 270 may cause the viscosity or phase of the outlet stream 270 to change, slowing down the flow of the outlet stream 270 or increasing an amount of energy required to move the outlet stream 270 along the pipeline 12. The additive limits database 364 can include a series of lookup tables and/or formulas that can be used to estimate an optimal additive composition along the pipeline 12. For example, the optimal additive composition can be determined or selected from the additive limits database 364 based on the temperature, pressure, flow rate, composition, etc., of the outlet stream 270 within the pipeline 12. In some embodiments, the blend controller 350 seeks to maintain the additive composition of an additive below an acceptable predetermined threshold value based on the additive limits database 364. For example, the controller 102 may seek to maintain the additive composition of the anti-cracking additive below a predetermined threshold value related to the composition of the outlet stream 270 to avoid increasing the viscosity of the outlet stream 270. If the additive composition exceeds the predetermined threshold, the pipeline control manager 368 may determine one or more responsive control actions (e.g., closing the first valve 220 to reduce the flow rate of the first inlet stream 250 comprising additives into the blend header 240, open the second valve 230 to increase the flow rate of the second inlet stream 260 comprising of natural gas into the blend header 240, etc.) to maintain the additive concentration below the predetermined threshold, according to some embodiments. In some embodiments, the blend controller 350 seeks to maintain the additive composition of an additive above an acceptable predetermined threshold value based on the additive limits database 364. For example, the controller 102 may seek to maintain the additive composition of a paraffin inhibitor additive above a predetermined threshold value related to the composition of the outlet stream 270 to avoid building up wax in the pipeline 12. If the additive composition is below the predetermined threshold, the pipeline control manager 368 may determine one or more responsive control actions (e.g., opening the first valve 220 to increase the flow rate of the first inlet stream 250 comprising additives into the blend header 240, close the second valve 230 to decrease the flow rate of the second inlet stream 260 comprising of natural gas into the blend header 240, etc.) to maintain the additive concentration above the predetermined threshold, according to some embodiments. In some embodiments, limits for the additive concentration, or any other limits described herein are established by regulatory agencies and/or engineering studies. In some embodiments, the additive limits database 364 is optional.

The memory 358 is shown to include the equipment limits database 366, according to some embodiments. Some equipment related to the operation of the pipeline 12 may require a certain composition of the outlet stream 270 in order to operate effectively. For example, a compressor configured to increase a pressure of the outlet stream 270 may have a reduced output efficiency (e.g., the energy required to maintain an output flow rate of the outlet stream 270, etc.) when the hydrogen composition in the outlet stream 270 is above a threshold. As another example, a burner configured to burn natural gas in the fluid 16 may have a reduced combustion efficiency (e.g., the amount of the outlet stream 270 that is fully combusted, etc.) when the hydrogen composition and/or an additive in the outlet stream 270 is above a threshold. The equipment limits database 366 can include a series of lookup tables that can be used to estimate an equipment composition limit along the pipeline 12. For example, the equipment compensation limit can be determined or selected from the equipment limits database 366 based on the temperature, pressure, flow rate, composition, etc., of the outlet stream 270 within the pipeline 12, an environmental condition proximate the equipment related to the operation of the pipeline 12, and/or information related to equipment related to the operation of the pipeline 12 (e.g., pump curves for pumps related to the operation of the pipeline 12, burner specifications for burners related to the operation of the pipeline 12, etc.). In some embodiments, the blend controller 350 seeks to maintain the hydrogen composition of the outlet stream 270 below a certain value based on the equipment limits database 366. For example, the blend controller 350 may seek to maintain the hydrogen composition of the outlet stream 270 below a predetermined threshold value to avoid decreasing the combustion efficiency of a burner related to the operation of the pipeline 12. If the hydrogen composition of the outlet stream 270 exceeds the predetermined threshold, the pipeline control manager 368 may determine one or more responsive control actions (e.g., decreasing the flow rate of the hydrogen, increasing the flow rate of natural gas, etc.) to maintain the additive concentration below the predetermined threshold, according to some embodiments. In some embodiments, limits for the hydrogen concentration, additive concentration, or any other limits described herein are established by regulatory agencies and/or engineering studies. In some embodiments, the equipment limits database 366 is optional.

Referring still to FIG. 4, the display data manager 370 is configured to generate display data and provide the display data to the user interface 352, according to some embodiments. The user interface 352 may be a remote device, a user device, a display screen, etc., according to some embodiments. In some embodiments, the display data generated by the display data manager 370 includes a composition graph of the outlet stream 270 and/or the hydrogen composition in the outlet stream 270. The display data can also include any of the sensor data obtained by the blend controller 350, and/or any of the outputs, inputs, or any determined values of the fraction limits database 360, the fracture limits database 362, the additive limits database 364, the equipment limits database 366, or the pipeline control manager 122, according to some embodiments. In some embodiments, the display data also includes the control decisions made by the pipeline control manager 122.

### Implementation Infrastructure

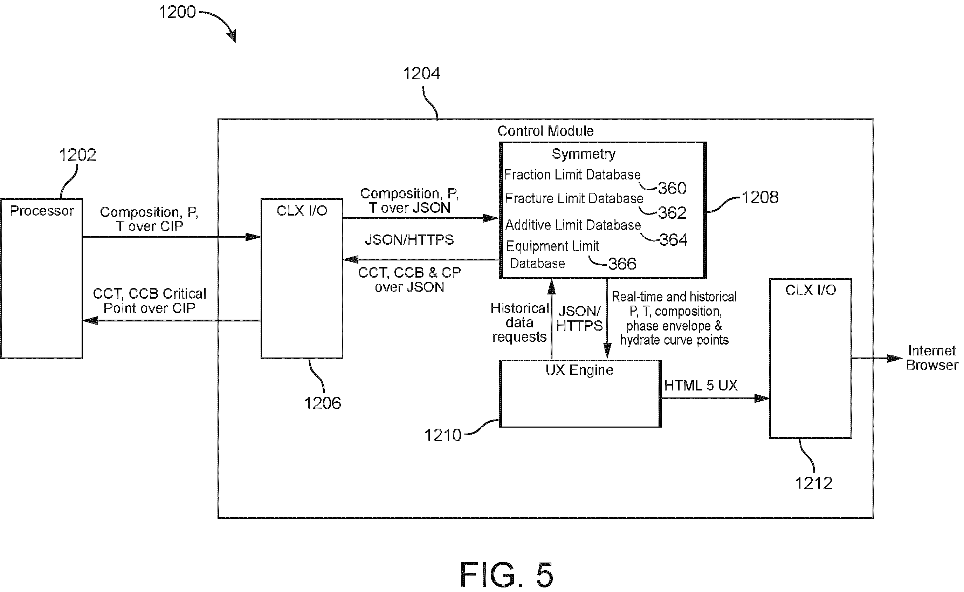

Referring particularly to FIG. 5, the blend control system 300 can be implemented on a system infrastructure 1200, according to some embodiments. The system infrastructure 1200 can include a control logic processor 1202, and a computer module 1204, according to some embodiments. The computer module 1204 includes an input/output (I/O) module 1206, a computing module 1208, a user experience (UX) engine 1210, and a display server 1212, according to some embodiments. In some embodiments, the control logic processor 1202 is configured to implement any of the functionality of the pipeline control manager 122. In some embodiments, the control logic processor 1202 is configured to obtain the sensor data from the sensing units 30 (e.g., temperature, pressure, composition, and flow rate) and provide the sensor data to the I/O module 1206 of the computer module 1204. The computer module 1204 may be remotely positioned from the control logic processor 1202 and communications between the computer module 1204 and the control logic processor 1202 can be wireless, according to some embodiments.

In some embodiments, the I/O module 1206 is configured to provide the sensor data (e.g., the composition, the pressure, the temperature, etc.) to the computing module 1208. In some embodiments, the computing module 1208 is configured to implement any of the functionality of include the fracture limits database 362, the additive limits database 364, and/or the equipment limits database 366. For example, the computing module 1208 may store and use the fracture limits database 362, the additive limits database 364, and/or the equipment limits database 366, according to some embodiments. The computing module 1208 is configured to use the sensor data and can output a value for an optimal composition of the outlet stream 270 based on each of the fracture limits database 362, the additive limits database 364, and/or the equipment limits database 366. to the I/O module 1206, according to some embodiments. The I/O module 1206 is configured to provide the optimal composition to the control logic processor 1202 for use in generating the control decisions in a closed-loop control scheme, according to some embodiments. In some embodiments, the computing module 1208 is also configured to provide real-time and historical data of the pressure, temperature, composition, phase envelope, and hydrate curve points to the UX engine 1210. In some embodiments, the UX engine 1210 is configured to perform the functionality of the display data manager 370. In some embodiments, the UX engine 1210 is configured to generate display data and provide the display data to the display server 1212 as an HTML or HTML5 file. The display data can be accessed and viewed by a remote device via the display server 1212, according to some embodiments. In some embodiments, the computing module 1208 provides the real-time and historical pressure, temperature, composition, phase, envelope, and hydrate curve points to the UX engine 1210 in response to receiving a historical data request from the UX engine 1210.

### Process

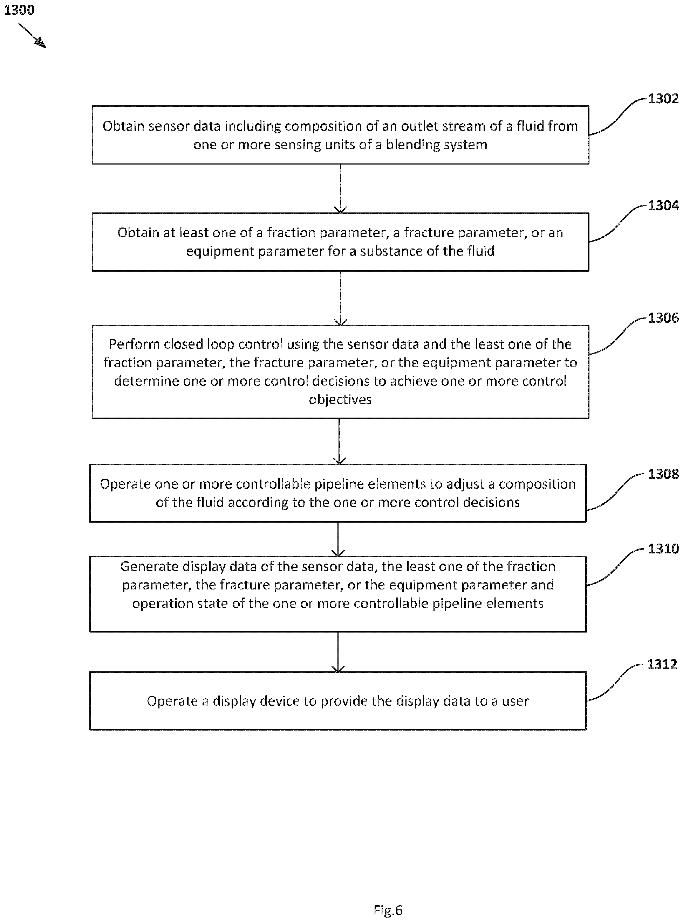

Referring now to FIG. 6, a flow diagram of a process 1300 for operating a blending station using real-time sensor data is shown, according to some embodiments. Process 1300 includes steps 1302-1312 and can be performed by the system 10, the blend control system 300, and/or the control system 100, according to some embodiments. In some embodiments, process 1300 is performed by the system infrastructure 1200.

Process 1300 includes obtaining sensor data including composition of a gas from one or more sensing units of a pipeline system (step 1302), according to some embodiments. In some embodiments, step 1302 is performed by the blend control system 300. For example, the properties (e.g., temperature, pressure, flow rate, composition, etc.) of the first inlet stream 250 can be obtained by the first inlet unit 302, the properties of the second inlet stream 260 can be obtained by the second inlet unit 304, and the properties of the outlet stream 270 can be obtained by the outlet unit 312, according to some embodiments. In other embodiments, the properties of the first inlet stream 250 can be obtained by the first inlet unit 302, the properties of the second inlet stream 260 may be unknown (e.g., when there is not a sensing unit located on the second inlet 214, etc.), and the properties of the outlet stream 270 can be obtained by the outlet unit 312. In various embodiments, the properties of additional inlet streams (e.g., the third inlet stream, the fourth inlet stream, etc.) may be obtained by additional sensing units (e.g., the third inlet unit, the fourth inlet unit, etc.). In still other embodiments, the properties of the first inlet stream 250 and the second inlet stream 260 may be unknown, and the properties of the outlet stream 270 can be obtained by the outlet unit 312. The sensor data can be provided from the sensing units 30 (e.g., the first inlet unit, 302, the second inlet unit 304, the outlet unit 312, etc.) to the controller 102, the blend controller 350, and/or the control logic processor 1202, according to some embodiments.

Process 1300 includes obtaining one or more maximum or minimum substance compositions (e.g., a maximum hydrogen composition, a minimum hydrogen composition, a minimum anti-cracking agent composition, etc.) from one or more databases (e.g., the fraction limits database 360, the fracture limits database 362, the additive limits database 364, the equipment limits database 366, etc.) for the fluid (step 1304), according to some embodiments. The one or more databases may determine various limits of the fluid composition (e.g., a maximum hydrogen composition, a maximum composition of anti-cracking agents, etc.) based on the temperature and the pressure of the outlet stream 270, according to some embodiments. In some embodiments, the one or more databases are determined, selected, or generated based on the composition of the fluid as detected by the sensing units 30 (or more specifically, the fourth sensor 104d of the outlet unit 312). In some embodiments, various parameters of the one or more databases are adjusted based on the detected or sensed composition of the fluid. In some embodiments, step 1304 is performed by the operating phase manager 116 or the computing module 1208 (e.g., using the techniques described in greater detail above with reference to the operating phase manager 116).

Process 1300 includes performing closed-loop control using the sensor data and the one or more databases to determine one or more control decisions to achieve one or more control objectives (step 1306), according to some embodiments. In some embodiments, the sensor data that is used may include the temperature, the pressure, the flow rate, and/or the composition. In some embodiments, the sensor data that is used includes the temperature, the pressure, the flow rate, and/or the composition from the outlet unit 312. In some embodiments, step 1306 is performed by the blend control system 300, the pipeline control manager 122, and/or the control logic processor 1202. In some embodiments, the one or more control objectives include limiting or preventing hydrate formation in the fluid, maintaining the fluid at a desired phase (e.g., a dense phase), maintaining the fluid below a hydrogen content, maintaining the quantity of anti-cracking agents in the fluid, etc. In some embodiments, the one or more control decisions include opening the first valve 220, closing the first valve 220, opening the second valve 230, closing the second valve 230, and opening or closing additional valves (e.g., the third valve, the fourth valve, etc.). In various embodiments, the one or more control decisions adjusting a pump operation (to adjust the pressure), applying heating or cooling (to adjust the temperature), adjusting a compressor operation (to adjust the pressure), etc. The pipeline control manager 122 may implement a PID control scheme to determine control decisions to meet the control objectives, according to some embodiments.

Process 1300 includes operating one or more controllable pipeline elements to achieve the one or more control objectives (step 1308), according to some embodiments. In various embodiments, step 1308 includes providing the one or more control decisions from the controller 102 (e.g., the pipeline control manager 122, etc.) to the controllable pipeline elements 106. In some embodiments, step 1310 includes providing the one or more control decisions from the blend control system 300 to the first valve 220 and/or the second valve 230. In some embodiments, the controllable pipeline elements include the first valve 220, the second valve 230, additional valves (e.g., the third valve, the fourth valve, etc.), injection systems for pumping or injecting an additive to the fluid, a heating element (e.g., a heating coil), a cooling element, a pump, a compressor, a separator, etc. The controllable pipeline elements are the controllable pipeline elements 106, according to some embodiments.

Process 1300 includes generating display data of the one or more substance compositions, the sensor data, and one or more control decisions (step 1310), according to some embodiments. The one or more substance compositions can include the hydrogen composition, the composition of anti-cracking agents, etc., according to some embodiments. The sensor data can include the properties of the first inlet stream 250, the properties of the second inlet stream 260, the properties of the outlet stream 270, etc., according to some embodiments. The one or more control decisions can include opening the first valve 220, closing the second valve 230, etc., according to some embodiments. In some embodiments, the sensor data includes the temperature of the fluid, the pressure of the fluid, the flow rate of the fluid, and/or the composition of the fluid. In some embodiments, step 1310 is performed by the display data manager 370 and/or the UX engine 1210.

Process 1300 includes operating a display device to provide the display data to a user (step 1312), according to some embodiments. In some embodiments, the display device is the user interface 352. In some embodiments, the display device is configured to access the display data via a server or a webpage (e.g., the display server 1212).

### Configuration of Exemplary Embodiments

As utilized herein, the terms "approximately", "about", "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like, as used herein, mean the joining of two members directly or indirectly to one another. Such joining may be stationary (e.g., permanent) or moveable (e.g., removable, releasable, etc.). Such joining may be achieved with the two members or the two members and any additional intermediate members being integrally formed as a single unitary body with one another or with the two members or the two members and any additional intermediate members being attached to one another.

References herein to the positions of elements (e.g., "top," "bottom," "above," "below," etc.) are merely used to describe the orientation of various elements in the figures. It should be noted that the orientation of various elements may differ according to other exemplary embodiments, and that such variations are intended to be encompassed by the present disclosure.

Also, the term "or" is used in its inclusive sense (and not in its exclusive sense) so that when used, for example, to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

It is important to note that the construction and arrangement of the elements of the systems and methods as shown in the exemplary embodiments are illustrative only. Although only a few embodiments of the present disclosure have been described in detail, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements. It should be noted that the elements and/or assemblies of the components described herein may be constructed from any of a wide variety of materials that provide sufficient strength or durability, in any of a wide variety of colors, textures, and combinations. Accordingly, all such modifications are intended to be included within the scope of the present inventions. Other substitutions, modifications, changes, and omissions may be made in the design, operating conditions, and arrangement of the preferred and other exemplary embodiments without departing from scope of the present disclosure or from the spirit of the appended claims.

## Claims

1. A controller for a blending system, the controller **characterized by** processing circuitry configured to:
obtain sensor data of a fluid of an outlet stream of the blending system from sensors of a sensing unit;
obtain at least one of a fraction parameter, a fracture parameter, or an equipment parameter, for a hydrogen composition in the fluid;
perform a control scheme using the sensor data and at least one of the fraction parameter, the fracture parameter, or the equipment parameter, to determine one or more control decisions; and
operate one or more controllable pipeline elements to adjust the hydrogen composition of the fluid according to the one or more control decisions.

2. The controller of claim 1, **characterized in that** the control scheme uses the sensor data and the fraction parameter, the fracture parameter, and the equipment parameter to determine the one or more control decisions.

3. The controller of claim 2, **characterized in that** the control scheme uses the sensor data and the fraction parameter, the fracture parameter, and the equipment parameter in real time to determine the one or more control decisions.

4. The controller of claim 1, 2, or 3 further **characterized by**:
provide display data related to the sensor data and an operational sate of one or more controllable pipeline elements for display of information related to the sensor data and the operational sate of one or more controllable pipeline elements.

5. The controller of claim 1, 2, or 3, **characterized in that** the control decisions comprise increasing or decreasing pressure, increasing or decreasing temperature by heating or cooling, changing composition by injecting additives, or changing the composition by injecting hydrogen.

6. The controller of claim 5, **characterized in that** the control decisions comprise increasing or decreasing the pressure, increasing or decreasing the temperature by heating or cooling, changing the composition by injecting additives, and changing the composition by injecting hydrogen.

7. The controller of claim 1, 2, or 3, **characterized in that** control objectives for the control scheme comprise maximizing the hydrogen composition of the fluid, reducing likelihood of a pipeline fracturing, maintaining a gas in a desired phase, transitioning the gas into the desired phase, or operating with the gas below a desired hydrogen composition.

8. The controller of claim 7, **characterized in that** the control objectives comprise maximizing the hydrogen composition of the fluid, reducing likelihood of the pipeline fracturing, maintaining the gas in the desired phase, transitioning the gas into the desired phase, and operating with the gas below the desired hydrogen composition.

9. The controller of claim 1, 2, or 3, further comprising a fractional limits database, a fracture limits database, an additives limit database, and an equipment limits database.

10. A method of operating a blending system, the method **characterized by**:
obtaining sensor data of a fluid of an outlet stream of the blending system from sensors of a sensing unit;
obtaining at least one of a fraction parameter, a fracture parameter, or an equipment parameter for a hydrogen composition in the fluid;
performing a real-time and closed-loop control scheme using the sensor data and at least one of the fraction parameter, the fracture parameter, or the equipment parameter, to determine one or more control decisions; and
operating one or more controllable pipeline elements to adjust the hydrogen composition of the fluid according to the one or more control decisions.
